# EUROPEAN PATENT APPLICATION

(11) **EP 4 787 070 A2**
(43) Date of publication of application: **05.08.2026**
(21) Application number: 26158021.1
(22) Date of filing: 06.12.2021
(51) Int. Cl.: G02F 1/313

(54) **CHIP AND OPTICAL COMMUNICATION DEVICE**

(62) Divisional of application: 21966609.6
(71) Applicant: Huawei Technologies Co., Ltd., Shenzhen, Guangdong 518129 (CN)
(72) Inventor: CHANG, Limin, Shenzhen, 518129 (CN); CHEN, Hongmin, Shenzhen, 518129 (CN); SUN, Mengdie, Shenzhen, 518129 (CN); YANG, Li, Shenzhen, 518129 (CN); CHEN, Xin, Shenzhen, 518129 (CN); YUAN, Jun, Shenzhen, 518129 (CN)
(74) Representative: Thun, Clemens

(57) **Abstract**

Embodiments of this application disclose a chip and an optical communication device. The chip may include a substrate, an insulation layer located on a side of the substrate, and a first waveguide and a second waveguide in the insulation layer. The second waveguide is located on a side of the first waveguide away from the substrate. The first waveguide has an electro-optic effect. A transmission loss of the second waveguide is smaller than a transmission loss of the first waveguide. In this way, the first waveguide may be used as a part in an active component, and the first waveguide may be used for electro-optic modulation. The second waveguide may be used as a passive component, and the second waveguide is used to transmit an optical signal. A first coupling portion of the first waveguide and a second coupling portion of the second waveguide form a first coupling structure, and the first coupling structure is configured to implement optical coupling between the first waveguide and the second waveguide. Therefore, the active component and the passive component may be integrated by using the first waveguide and the second waveguide, and the chip obtained after integration has a better transmission characteristic and can implement electro-optic modulation, further improving performance of an optical communication system.

## Description

### TECHNICAL FIELD

This application relates to the field of semiconductor technologies, and in particular, to a chip and an optical communication device.

### BACKGROUND

With development of optical communication, an optical communication system requires more functions. Some passive components and active components need to be disposed in the optical communication system to adapt to more scenarios. The passive components may be, for example, waveguides. The active components may be, for example, electro-optic modulators and photoelectric detectors. With increasing pressure of network upgrade and increasing demand for green emission reduction, operators need to upgrade networks at low costs with less energy consumption. It is an inevitable trend to combine passive components and active components into one chip to implement photonic integration. The chip implementing photonic integration can be applied to a scenario such as high-baud-rate communication. However, a high-performance passive component requires a waveguide to have a relatively small loss, and an active component also has a special requirement on a waveguide or a photoelectric material due to a special requirement of the active component. For example, an electro-optic modulator requires a waveguide to have an electro-optic effect, and a photoelectric detector requires a light absorbing material to have an optical-to-electrical conversion characteristic. Currently, an active component and a passive component with a small loss cannot be integrated into a same chip.

### SUMMARY

In view of this, a first aspect of this application provides a chip and an optical communication device to integrate an active component and a passive component with a small loss into a same chip.

According to a first aspect of the embodiments of this application, a chip is provided. The chip may include a substrate, an insulation layer located on a side of the substrate, and a first waveguide and a second waveguide that are in the insulation layer. The second waveguide is located on a side of the first waveguide away from the substrate. The first waveguide has an electro-optic effect. A transmission loss of the second waveguide is smaller than a transmission loss of the first waveguide. In this way, the first waveguide may be used as a part in an active component, and the first waveguide may be used for electro-optic modulation. The second waveguide may be used as a passive component, and the second waveguide is used to transmit an optical signal. In this way, a passive component with a small loss can be implemented. A first coupling portion of the first waveguide and a second coupling portion of the second waveguide form a first coupling structure, and the first coupling structure is configured to implement optical coupling between the first waveguide and the second waveguide. Therefore, the active component and the passive component may be integrated by using the first waveguide and the second waveguide, the passive component in the chip obtained after integration has a better transmission characteristic, and the active component can implement electro-optic modulation. Compared with a chip including only the first waveguide or only the second waveguide, the chip obtained after integration can have a smaller loss and more diversified functions, expanding application scenarios of the chip, and improving performance of an optical communication system including an optical chip to some extent.

In some possible implementations, a material of the first waveguide is silicon, and a material of the second waveguide is silicon nitride.

In this embodiment of this application, the material of the first waveguide may be silicon, and the first waveguide and the insulation layer form a silicon-on-insulator (Silicon-On-Insulator, SOI) structure, and are compatible with a complementary metal oxide semiconductor (complementary metal oxide semiconductor, CMOS) process. The material of the second waveguide may be silicon nitride, and has a relatively small transmission loss, integrating the active component with high performance and the passive component with a small loss.

In some possible implementations, the chip further includes:
a third waveguide in the insulation layer, where the third waveguide is located on a side of the second waveguide away from the substrate; electro-optic modulation efficiency of the third waveguide is higher than electro-optic modulation efficiency of the first waveguide; and a fifth coupling portion of the first waveguide, a sixth coupling portion of the second waveguide, and a seventh coupling portion of the third waveguide form a third coupling structure, and the third coupling structure is configured to implement optical coupling between the second waveguide and the third waveguide.

In this embodiment of this application, the chip further includes a third waveguide. Electro-optic modulation efficiency of the third waveguide is higher than that of the first waveguide. The third waveguide may be coupled to the second waveguide. Therefore, a modulator with higher electro-optic modulation efficiency can be obtained by using the third waveguide, satisfying more application scenarios.

In some possible implementations, a material of the third waveguide is lithium niobate, indium phosphide, or tantalum niobate.

In this embodiment of this application, a material of the third waveguide may be lithium niobate, indium phosphide, or tantalum niobate, and can adapt to more scenarios while having higher electro-optic modulation efficiency.

In some possible implementations, the chip further includes:
a first electrode pair located on two sides of the third waveguide in the insulation layer.

In this embodiment of this application, the two sides of the third waveguide may be provided with the first electrode pair. The first electrode pair is configured to generate a first modulation electric field to modulate an optical signal in the third waveguide, satisfying an optical communication requirement.

In some possible implementations, a thickness range of an insulation layer between the second waveguide and the third waveguide is [200 nm, 550 nm].

In this embodiment of this application, a thickness of the insulation layer between the second waveguide and the third waveguide has an appropriate range, so that coupling efficiency between the second waveguide and the third waveguide can be higher.

In some possible implementations, the chip further includes:
a photoelectric detector in the insulation layer, where the photoelectric detector is connected to an inter-layer interconnection structure by using a doping structure, the doping structure is a semiconductor layer having a doping element, a material of the semiconductor layer is consistent with a material of the first waveguide, and a distance between the doping structure and the substrate is consistent with a distance between the first waveguide and the substrate.

In this embodiment of this application, the chip further includes the photoelectric detector. The photoelectric detector may be connected to the doping structure. The doping structure is a semiconductor layer having a doping element. The material of the semiconductor layer is consistent with the material of the first waveguide, and the semiconductor layer and the first waveguide are located at a same layer. In this way, a semiconductor structure and the first waveguide can be obtained by etching a same film layer, simplifying a process.

In some possible implementations, a distance between a surface of the photoelectric detector away from the substrate and a surface of the substrate is less than a distance between a surface of the second waveguide away from the substrate and the surface of the substrate.

In this embodiment of this application, an upper surface of the photoelectric detector may be lower than an upper surface of the second waveguide, so that manufacturing of the photoelectric detector and manufacturing of the second waveguide do not affect each other. For example, an impact caused on the photoelectric detector by flatness caused due to using the second waveguide as a stop layer is avoided.

In some possible implementations, a size range of the photoelectric detector in a direction perpendicular to the surface of the substrate is [200 nm, 350 nm].

In this embodiment of this application, the photoelectric detector may have an appropriate thickness, and is compatible with another component while ensuring an optical detection characteristic.

In some possible implementations, the chip further includes:
a laser diode located on a side of the substrate, and a material of the laser diode includes a group III-V compound.

In this embodiment of this application, the chip may further include the laser diode to implement a light emission function in the chip, satisfying more application scenarios.

In some possible implementations, the chip further includes:
a semiconductor optical amplifier, configured to amplify light emitted by the luminous diode, where a material of the semiconductor optical amplifier includes a group III-V compound.

In this embodiment of this application, the chip further includes the semiconductor optical amplifier to amplify an optical signal in the chip, satisfying more application scenarios.

In some possible implementations, the chip further includes:
a second electrode pair located on two sides of the first waveguide in the insulation layer.

In this embodiment of this application, the two sides of the first waveguide may be provided with the second electrode pair. The second electrode pair is configured to generate a second modulation electric field to modulate an optical signal in the first waveguide, satisfying an optical communication requirement.

In some possible implementations, a hydrogen content in a silicon nitride material of the second waveguide is less than or equal to 10%.

In this embodiment of this application, the hydrogen content in the silicon nitride material of the second waveguide has an appropriate range to control a transmission loss of the second waveguide.

In some possible implementations, a transmission loss of the second waveguide is less than or equal to 0.5 dB/cm.

In this embodiment of this application, the transmission loss of the second waveguide is relatively small to improve energy utilization.

In some possible implementations, a size range of the second waveguide in a direction perpendicular to the surface of the substrate is [300 nm, 400 nm].

In this embodiment of this application, the thickness of the second waveguide has a proper range, so that the second waveguide can be compatible with another component while having a relatively small transmission loss.

In some possible implementations, a size range of the insulation layer between the first waveguide and the second waveguide in a direction perpendicular to the surface of the substrate is [40 nm, 100 nm].

In this embodiment of this application, the insulation layer between the first waveguide and the second waveguide has a proper thickness to ensure relatively high optical coupling efficiency of the first waveguide and the second waveguide and implement ion implantation through the insulation layer when the ion implantation needs to be performed at a location at a same layer as the first waveguide.

According to a second aspect of the embodiments of this application, an optical communication device is provided. The device includes the chip according to the first aspect of the embodiments of this application.

According to the foregoing technical solutions, it can be learned that the embodiments of this application have the following advantages:

The embodiments of this application provide a chip and an optical communication device. The chip may include a substrate, an insulation layer located on a side of the substrate, and a first waveguide and a second waveguide that are in the insulation layer. The second waveguide is located on a side of the first waveguide away from the substrate. The first waveguide has an electro-optic effect. A transmission loss of the second waveguide is smaller than a transmission loss of the first waveguide. In this way, the first waveguide may be used as a part in an active component, and the first waveguide may be used for electro-optic modulation. The second waveguide may be used as a passive component, and the second waveguide is used to transmit an optical signal. In this way, a passive component with a small loss can be implemented. A first coupling portion of the first waveguide and a second coupling portion of the second waveguide form a first coupling structure, and the first coupling structure is configured to implement optical coupling between the first waveguide and the second waveguide. Therefore, the active component and the passive component may be integrated by using the first waveguide and the second waveguide, the passive component in the chip obtained after integration has a better transmission characteristic, and the active component can implement electro-optic modulation. Compared with a chip including only the first waveguide or only the second waveguide, the chip obtained after integration can have a smaller loss and more diversified functions, expanding application scenarios of the chip, and improving performance of an optical communication system including an optical chip to some extent.

### BRIEF DESCRIPTION OF DRAWINGS

To clearly understand specific implementations of this application, the following briefly describes the accompanying drawings used for describing the specific implementations of this application. Apparently, the accompanying drawings show merely some embodiments of this application.
FIG. 1 is a schematic top view of a chip according to an embodiment of this application;
FIG. 2 is a sectional view of the chip in FIG. 1 along a direction AA;
FIG. 3 is a top view of another chip according to an embodiment of this application;
FIG. 4 is a sectional view of the chip in FIG. 3 along a direction BB;
FIG. 5 is a sectional view of a chip according to an embodiment of this application;
FIG. 6 is a top view of another chip according to an embodiment of this application;
FIG. 7 is a sectional view of the chip in FIG. 6 along a direction AA;
FIG. 8 is a top view of another chip according to an embodiment of this application;
FIG. 9 is a sectional view of the chip in FIG. 8 along a direction BB;
FIG. 10 is a sectional view of another chip according to an embodiment of this application;
FIG. 11 is a sectional view of still another chip according to an embodiment of this application;
FIG. 12 is a sectional view of still another chip according to an embodiment of this application;
FIG. 13 is a sectional view of yet another chip according to an embodiment of this application; and
FIG. 14 is a schematic diagram of a structure of an optical communication system according to an embodiment of this application.

### DESCRIPTION OF EMBODIMENTS

Embodiments of this application provide a chip and an optical communication device to integrate an active component and a passive component with a small loss into a same chip.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such ways are interchangeable in proper circumstances, so that the embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

This application is described in detail with reference to schematic diagrams. For ease of description, a sectional view of a component structure is not partially enlarged according to a general proportion, and the schematic diagram is merely an example, and shall not limit the protection scope of this application. In addition, the length, width, and depth of the three-dimensional space should be included in the actual production.

With development of optical communication, an optical communication system requires more functions. Some passive components and active components need to be disposed in the optical communication system to adapt to more scenarios. The passive components may be, for example, waveguides. The active component may be, for example, electro-optic modulators and photoelectric detectors. The passive components and the active components are formed in a same chip, so that the chip can be applied a scenarios such as high-baud-rate communication.

However, a current chip integrating a plurality of functional components is based on a single material platform, a high-performance passive component requires a waveguide to have a relatively small loss, and an active component also has a special requirement on a waveguide or a photoelectric material due to a special requirement of the active component. For example, an electro-optic modulator requires a waveguide to have an electro-optic effect, and a photoelectric detector requires a light absorbing material to have an optical-to-electrical conversion characteristic. A single material cannot easily meet the requirements of different components. For example, an SOI chip based on a silicon-on-insulator SOI may be integrated with a passive component and some active components. The active components may include a modulator, a detector, and the like to implement functions of receiving and sending in a single device. However, a waveguide in the SOI chip has problems such as a large transmission loss, large reflection, small process tolerance, large dispersion, and temperature sensitivity, and is not suitable for a multiplexer/demultiplexer (MUX/DeMux) that is insensitive to temperature. For an integrated component based on an SiN platform, a plurality of SiN passive waveguide components, such as a grating coupler (Grating Coupler) and a beam splitting and combining structure, may be implemented on a single chip. In addition, an SiN passive waveguide structure is insensitive to temperature, and is conducive to obtaining a temperature-insensitive Mux/DeMux structure with a small loss and small dispersion. However, it is difficult to integrate with an active component by using an integrated chip based on the SiN platform.

Therefore, currently, for a chip with a single material platform, an active component and a passive component with a small loss cannot be integrated in a same chip.

Based on the foregoing technical problem, the embodiments of this application provide a chip and an optical communication device. The chip may include a substrate, an insulation layer located on a side of the substrate, and a first waveguide and a second waveguide that are in the insulation layer. The second waveguide is located on a side of the first waveguide away from the substrate. The first waveguide has an electro-optic effect. A transmission loss of the second waveguide is smaller than a transmission loss of the first waveguide. In this way, the first waveguide may be used as a part in an active component, and the first waveguide may be used for electro-optic modulation. The second waveguide may be used as a passive component, and the second waveguide is used to transmit an optical signal. In this way, a passive component with a small loss can be implemented. A first coupling portion of the first waveguide and a second coupling portion of the second waveguide form a first coupling structure, and the first coupling structure is configured to implement optical coupling between the first waveguide and the second waveguide. Therefore, the active component and the passive component may be integrated by using the first waveguide and the second waveguide, the passive component in the chip obtained after integration has a better transmission characteristic, and the active component can implement electro-optic modulation. Compared with a chip including only the first waveguide or only the second waveguide, the chip obtained after integration can have a smaller loss and more diversified functions, expanding application scenarios of the chip, and improving performance of an optical communication system including an optical chip to some extent.

To make the objectives, features, and advantages of this application more apparent and understandable, the following describes specific implementations of this application in detail with reference to the accompanying drawings.

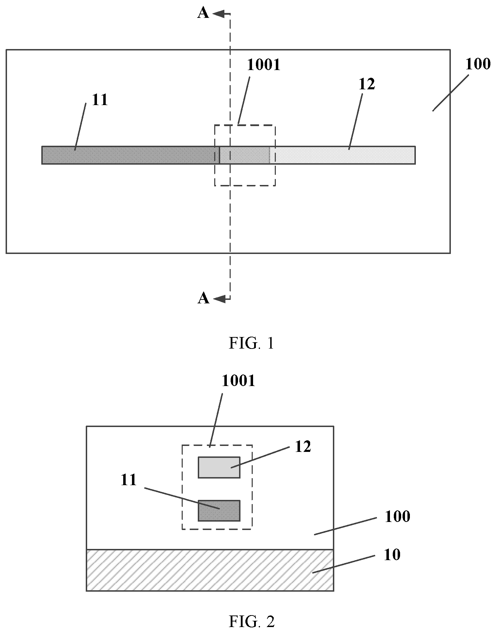

FIG. 1 is a schematic top view of a chip according to an embodiment of this application. FIG. 2 is a sectional view of the chip in FIG. 1 along a direction AA. The chip includes a substrate 10, an insulation layer 100 located on one side of the substrate 10, and a first waveguide 11 and a second waveguide 12 that are in the insulation layer 100.

In this embodiment of this application, the chip may include the substrate 10. The substrate 10 is configured to support a device structure on the substrate 10. The substrate 10 may be a semiconductor substrate, for example, may be an Si substrate, a Ge substrate, an SiGe substrate, a silicon-on-insulator (silicon on insulator, SOI) substrate, a germanium-on-insulator (germanium on insulator, GOI) substrate, or a silicon-and-germanium-on-insulator (silicon and germanium on insulator, SGOI) substrate. In another embodiment, the semiconductor substrate may alternatively be a substrate of another element semiconductor or a substrate of a compound semiconductor, for example, GaAs, InP, or SiC. In this embodiment of this application, a material of the substrate 10 may be silicon.

The insulation layer 100 may be disposed on one side of the substrate 10. The first waveguide 11 and the second waveguide 12 are disposed in the insulation layer 100. The insulation layer 100 can isolate the first waveguide 11 from the substrate 10, and can also isolate the second waveguide 12 from the substrate 10. The first waveguide 11 and the second waveguide 12 are used as a waveguide core layer. The insulation layer 100 may be used as a waveguide coverage layer. A refractive index of the insulation layer 100 is less than a refractive index of the first waveguide 11 and is also less than a refractive index of the second waveguide 12, so that an optical signal is limited in the first waveguide 11 and the second waveguide 12. The insulation layer 100 may include a single material, or may be a composite layer including a plurality of film layers of different materials. The material of the insulation layer 100 may be, for example, silicon oxide, or certainly may be another insulation material.

For ease of description, a direction from the substrate 10 to the insulation layer 100 may be referred to as "up", a direction from the insulation layer 100 to the substrate 10 may be referred to as "down", and a direction perpendicular to a surface of the substrate 10 is used as a longitudinal direction. However, such marking is for convenience and is irrelevant to a direction of gravity.

In this embodiment of this application, a material of the first waveguide 11 is different from a material of the second waveguide 12, so that the first waveguide 11 and the second waveguide 12 have different characteristics. The first waveguide 11 may have an electro-optic effect, to be specific, the refractive index of the first waveguide 11 may change due to an applied electric field. Therefore, the first waveguide 11 may be used as a part in an active component, and the first waveguide 11 may be used for electro-optic modulation. A transmission loss of the second waveguide 12 is less than a transmission loss of the first waveguide 11. Therefore, the second waveguide 12 may be used as a passive component, and an optical signal may be transmitted by using the second waveguide 12. In this way, the passive component with a small loss is implemented. The passive component and the active component may be integrated by using the first waveguide 11 and the second waveguide 12. In addition, in a chip obtained after integration, the passive component has a better transmission characteristic, and the active component can implement electro-optic modulation. Compared with a chip including only the first waveguide, the chip obtained after integration has a smaller transmission loss. Compared with a chip including only the second waveguide, the chip obtained after integration has an electro-optic modulation function. Therefore, the chip obtained after integration can have a smaller loss and more diversified functions, expanding application scenarios of the chip.

Specifically, the second waveguide 12 may be located on a side of the first waveguide 11 away from the substrate 10, to be specific, the second waveguide 12 is located above the first substrate 10, and the second waveguide 12 and the first waveguide 11 are vertically stacked. A first coupling portion of the first waveguide 11 and a second coupling portion of the second waveguide 12 form a first coupling structure 1001. The first coupling structure 1001 is configured to implement optical coupling between the first waveguide 11 and the second waveguide 12. In this way, an optical signal may be transmitted between the first waveguide 11 and the second waveguide 12. The optical signal is transmitted by using the first waveguide 11 in an area requiring electro-optic modulation, and the optical signal is transmitted by using the second waveguide 12 in an area that does not require electro-optic modulation, so that the chip has a smaller transmission loss while having the electro-optic modulation function, improving performance of the chip.

An optical coupling manner for the first waveguide 11 and the second waveguide 12 may be evanescent wave coupling. A size range of the insulation layer 100 between the first waveguide 11 and the second waveguide 12 in a direction perpendicular to a surface of the substrate 10 is [40 nm, 100 nm], in other words, a distance range between a top surface of the first waveguide 11 and a bottom surface of the second waveguide 12 is [40 nm, 100 nm], so that optical coupling efficiency between the first waveguide 11 and the second waveguide 12 is relatively high. During specific implementation, a size range of the second waveguide 12 in the direction perpendicular to the surface of the substrate 10 is [300 nm, 400 nm], and the transmission loss of the second waveguide 12 is less than or equal to 0.5 dB/cm.

For example, the material of the first waveguide 11 is silicon. The insulation layer 100 between the first waveguide 11 and the substrate 10 and the first waveguide 11 form an SOI structure. An SOI optical waveguide technology has excellent optical performance and can be fully compatible with a mature silicon-based complementary metal oxide semiconductor (complementary metal oxide semiconductor, CMOS) process. Therefore, the second waveguide 12 is integrated on an SOI platform, so that the optical performance is improved, and chip integration can also be improved. A material of the second waveguide 12 may be silicon nitride. A hydrogen content in the silicon nitride material of the second waveguide 12 may be less than or equal to 10%.

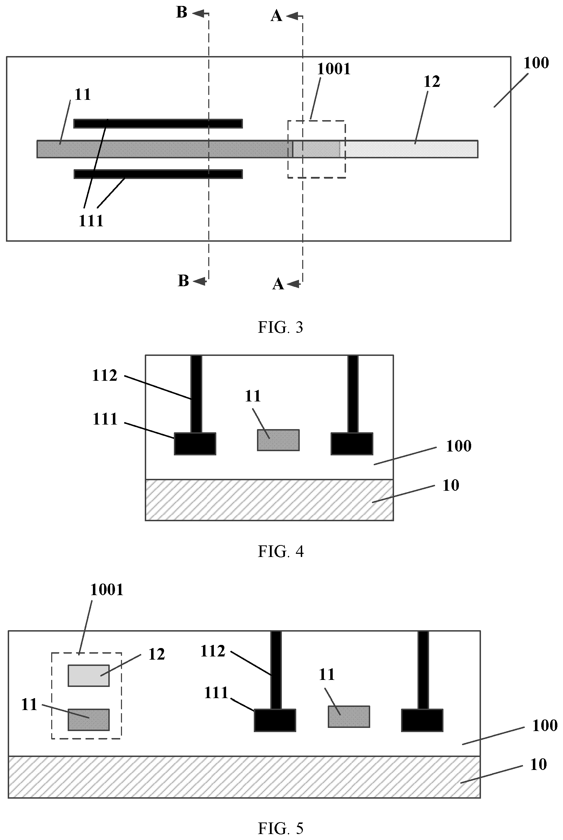

In this embodiment of this application, two sides of the first waveguide 11 may be provided with a second electrode pair 111. The second electrode pair 111 is located in the insulation layer 100. When different voltages are applied, the second electrode pair 111 can provide a second modulation electric field to modulate an optical signal in the first waveguide 11. FIG. 3 is a top view of another chip according to an embodiment of this application. FIG. 4 is a sectional view of the chip in FIG. 3 along a direction BB. The second electrode pair 111 and the first waveguide 11 may be arranged in a direction parallel to the surface of the substrate 10. The second modulation electric field between the second electrode pair 111 may be parallel to the surface of the substrate 10.

The second electrode pair 111 may be led out to a periphery of the insulation layer through an inter-layer interconnection structure 112. The inter-layer interconnection structure 112 may include a conductor column, or may include a conductor column and a conductor pad. There may be a plurality of conductor columns and a plurality of conductor pads. The conductor columns may be disposed between the conductor pads at neighboring layers. The conductor columns are disposed in through holes extending vertically in the insulation layer 100. By disposing a plurality of conductor pads, a through hole vertically running through the insulation layer is divided into a plurality of through holes, reducing a depth of each through hole and a depth-width ratio of each through hole, to reduce an etching difficulty and improve reliability of the inter-layer interconnection structure 112.

In this embodiment of this application, the sectional view of the chip in the direction AA has the first coupling structure 1001, and the sectional view of the chip in the direction BB has a modulator based on the first waveguide 11. Actually, the first coupling structure 1001 and the modulator based on the first waveguide 11 may coexist in a same chip. In addition, the first coupling structure 1001 and the modulator based on the first waveguide 11 may coexist in a sectional view taken along a non-linear direction. FIG. 5 is a sectional view of a chip according to an embodiment of this application. It should be noted that the schematic diagram in FIG. 5 represents that the first coupling structure 1001 and the modulator based on the first waveguide 11 coexist in the same chip, and an arrangement direction of the first coupling structure 1001 and the modulator based on the first waveguide 11 is not emphasized.

Specifically, the chip further includes an optical splitter (not shown in the figure) to form a Mach-Zehnder interferometer (Mach-Zehnder Interferometer, MZI) structure together with the first waveguide 11. The MZI includes a 1×2 beam splitter, two modulation waveguides, and a 2×1 beam combiner. An optical signal is split into two parts by using the 1×2 beam splitter, and the two parts are respectively directed to optical paths of two arms of the MZI structure. The two arms of the MZI structure each are provided with a modulation waveguide. Two sides of the modulation waveguide are provided with electrodes. The modulation waveguide can change a phase of an optical signal of the arm under the action of an electric field. Then, optical signals of the two arms of the MZI structure are combined by using the 2×1 beam combiner. The optical signals of the two arms interfere with each other, so that an optical signal characteristic after the combination changes relative to an input optical signal characteristic. For example, light intensity or an optical phase changes.The modulation waveguide of at least one arm may be the foregoing first waveguide 11, and is used to adjust an optical phase under the action of the electric field, and further change strength or a phase of an output optical signal.

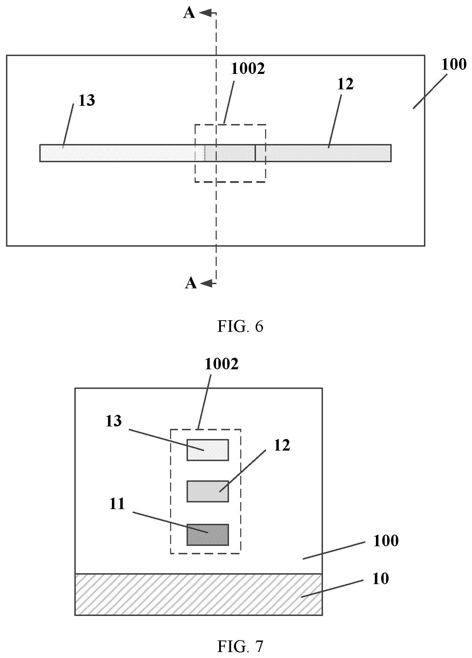

In this embodiment of this application, the chip further includes a third waveguide 13 in the insulation layer 100. FIG. 6 is a top view of another chip according to an embodiment of this application. FIG. 7 is a sectional view of the chip in FIG. 6 along a direction AA. Electro-optic modulation efficiency of the third waveguide 13 is higher than electro-optic modulation efficiency of the first waveguide 11. In this way, the third waveguide 13 may be used as a part in an active component, and the third waveguide 13 may be used for electro-optic modulation. In addition, the third waveguide 13 has relatively high modulation efficiency, helping improve overall modulation efficiency of the chip.

The third waveguide 13 is located on a side of the second waveguide 12 away from the substrate 10, in other words, is located above the second waveguide 12. A third coupling portion of the first waveguide 11 and a fourth coupling portion of the third waveguide 13 may form a second coupling structure to implement optical coupling between the first waveguide 11 and the third waveguide 13. In this way, an optical signal may be transmitted between the first waveguide 11 and the third waveguide 13, implementing higher modulation efficiency of the modulator by using the third waveguide 13, and further improving performance of the chip. The optical coupling between the first waveguide 11 and the third waveguide 13 may be evanescent wave coupling.

The third waveguide 13 is located on a side of the second waveguide 12 away from the substrate 10, in other words, is located above the second waveguide 12. A fifth coupling portion of the first waveguide 11, a sixth coupling portion of the second waveguide 12, and a seventh coupling portion of the third waveguide 13 form a third coupling structure 1002. The third coupling structure 1002 is configured to implement optical coupling between the second waveguide 12 and the third waveguide 13. In this way, an optical signal may be transmitted between the second waveguide 12 and the third waveguide 13, implementing higher modulation efficiency of the modulator by using the third waveguide 13, and further improving performance of the chip. The optical coupling between the second waveguide 12 and the third waveguide 13 may be evanescent wave coupling, and is implemented through evanescent wave coupling between the fifth coupling portion, the sixth coupling portion, and the seventh coupling portion.

Specifically, a thickness range of the insulation layer 100 between the second waveguide 12 and the third waveguide 13 is [200 nm, 550 nm] to implement relatively high optical coupling efficiency between the second waveguide 12 and the third waveguide 13. For example, the material of the third waveguide 13 may be lithium niobate (thin film lithium niobate, TFLN), indium phosphide (indium phosphide, InP), or tantalum niobate.

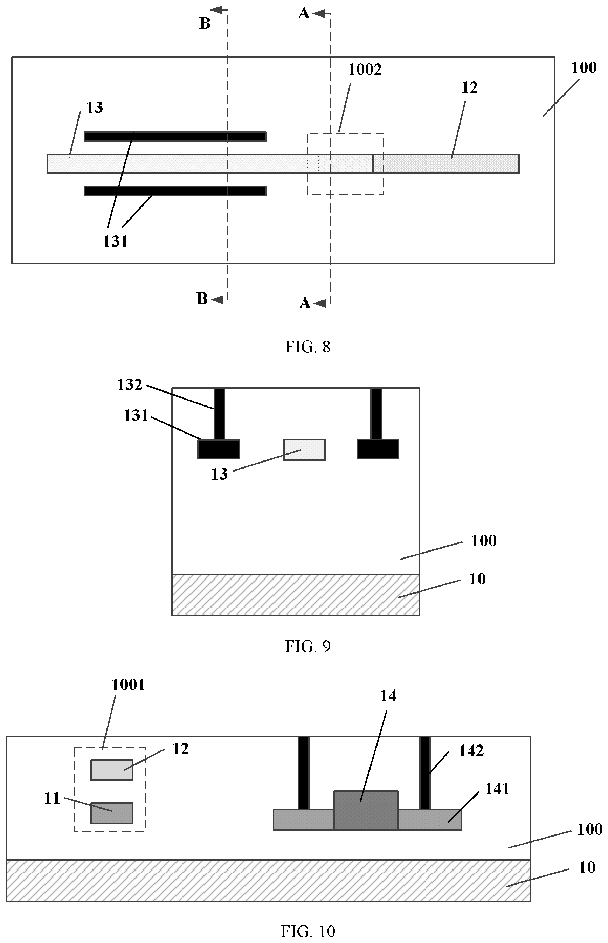

In this embodiment of this application, two sides of the third waveguide 13 may further be provided with a first electrode pair 131. The first electrode pair 131 is located in the insulation layer 100, and may provide a first modulation electric field when different voltages are applied to the first electrode pair 131, so as to modulate the optical signal in the third waveguide 13. FIG. 8 is a top view of another chip according to an embodiment of this application. FIG. 9 is a sectional view of the chip in FIG. 8 along a direction BB. The first electrode pair 131 and the third waveguide 13 may be arranged in a direction parallel to the surface of the substrate 10. The first modulation electric field between the first electrode pair 131 may be parallel to the surface of the substrate 10.

The first electrode pair 131 may be led out to a periphery of the insulation layer through an inter-layer interconnection structure 132. The inter-layer interconnection structure 132 may include a conductor column, or may include a conductor column and a conductor pad. There may be a plurality of conductor columns and a plurality of conductor pads. The conductor columns may be disposed between the conductor pads at neighboring layers. The conductor columns are disposed in through holes extending vertically in the insulation layer 100. By disposing a plurality of conductor pads, a through hole vertically running through the insulation layer is divided into a plurality of through holes, reducing a depth of each through hole and a depth-width ratio of each through hole, to reduce an etching difficulty and improve reliability of the inter-layer interconnection structure 132.

In this embodiment of this application, the sectional view of the chip in the direction AA has the third coupling structure 1002, and the sectional view of the chip in the direction BB has a modulator based on the third waveguide 13. Actually, the third coupling structure 1002 and the modulator based on the third waveguide 13 may coexist in a same chip. In addition, the third coupling structure 1002 and the modulator based on the third waveguide 13 may coexist in a sectional view taken along a non-linear direction. FIG. 10 is a sectional view of a chip according to an embodiment of this application. It should be noted that the schematic diagram in FIG. 10 represents that the third coupling structure 1002 and the modulator based on the third waveguide 13 coexist in the same chip, and an arrangement direction of the third coupling structure 1002 and the modulator based on the third waveguide 13 is not emphasized.

Specifically, the chip further includes an optical splitter (not shown in the figure) to form an MZI structure together with the third waveguide 13. A modulation waveguide of at least one arm in the MZI structure may be the foregoing third waveguide 13, and is used to adjust an optical phase under the action of an electric field, and further change strength or a phase of an output optical signal.

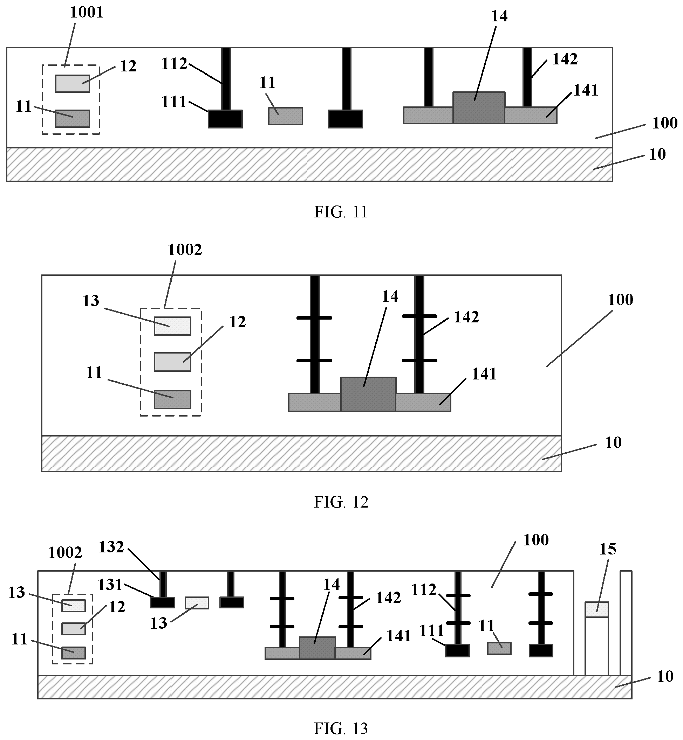

In this embodiment of this application, the insulation layer 100 may further be provided with a photoelectric detector (photo detector, PD) 14. The photoelectric detector 14 may detect an optical signal, and form an electrical signal based on the detected optical signal. FIG. 10, FIG. 11, FIG. 12, and FIG. 13 are sectional views of a plurality of chips according to an embodiment of this application. These figures do not emphasize an arrangement direction of components. In FIG. 10, the first coupling structure 1001 and the photoelectric detector 14 coexist in the same chip. In FIG. 11, the first coupling structure 1001, the modulator based on the first waveguide 11, and the photoelectric detector 14 coexist. In FIG. 12, the third coupling structure 1002 and the photoelectric detector 14 coexist. In FIG. 13, the third coupling structure 1002, the modulator based on the first waveguide 11, the modulator based on the third waveguide 13, and the photoelectric detector 14 coexist. A material of the photoelectric detector 14 may include germanium and the like. A size range of the photoelectric detector 14 in a direction perpendicular to the surface of the substrate 10 is [200 nm, 350 nm].

The photoelectric detector 14 may be led out of the insulation layer 100 through the inter-layer interconnection structure 142 to lead a generated electrical signal out of the insulation layer 100. The inter-layer interconnection structure 142 may include a conductor column, or may include a conductor column and a conductor pad. There may be a plurality of conductor columns and a plurality of conductor pads. The conductor columns may be disposed between the conductor pads at neighboring layers. The conductor columns are disposed in through holes extending vertically in the insulation layer 100. By disposing a plurality of conductor pads, a through hole vertically running through the insulation layer is divided into a plurality of through holes, reducing a depth of each through hole and a depth-width ratio of each through hole, to reduce an etching difficulty and improve reliability of the inter-layer interconnection structure 142.

Specifically, the photoelectric detector 14 may be connected to the inter-layer interconnection structure 142 through the doping structure 141. As shown in FIG. 10 to FIG. 13, the doping structure 141 may be a semiconductor layer having a doping element. The doping structure 141 is in good contact with the photoelectric detector 14 and the inter-layer interconnection structure 142, reducing a contact loss of an electrical signal. A material of the semiconductor layer may be consistent with a material of the first waveguide 11, and the semiconductor layer and the first waveguide 11 may be disposed at a same layer, in other words, a distance between the doping structure 141 and the substrate 10 is consistent with a distance between the first waveguide 11 and the substrate 10. In this way, the semiconductor layer and the first waveguide 11 may be obtained by etching a same film layer, reducing process complexity. In addition, a thickness range of the insulation layer 100 between the first waveguide 11 and the second waveguide 12 is set to [40 nm, 100 nm], so that ion implantation on the semiconductor layer can be better implemented to form a doping element in the semiconductor layer.

During specific implementation, a distance between a surface of the photoelectric detector 14 away from the substrate 10 and the surface of the substrate 10 is less than a distance between a surface of the second waveguide 12 away from the substrate 10 and the surface of the substrate 10, in other words, an upper surface of the photoelectric detector 14 is lower than an upper surface of the second waveguide 12. In this way, formation of the photoelectric detector 14 and formation of the second waveguide 12 do not affect each other. For example, a flatness process in which the second waveguide 12 is used as a stop layer does not affect integrity of the photoelectric detector 14.

In this embodiment of this application, the chip further includes a laser diode (laser diode, LD) 15 located on one side of the substrate 10. As shown in FIG. 13, the laser diode 15 is configured to generate an optical carrier. In this way, the modulator based on the first waveguide 11 may modulate an electrical signal on the second electrode pair 111 to an optical carrier in the first waveguide 11 to form an optical signal, and the modulator based on the third waveguide 13 may modulate an electrical signal on the first electrode pair 131 to an optical carrier in the third waveguide 13 to form an optical signal. A material of the laser diode 15 includes a group III-V compound, for example, gallium nitride.

In this embodiment of this application, the chip further includes a semiconductor optical amplifier (Semiconductor Optical Amplifier, SOA) located on one side of the substrate 10. The semiconductor optical amplifier is configured to amplify light emitted by a luminous diode, or amplify a modulated optical signal. A material of the semiconductor optical amplifier includes a group III-V compound, for example, gallium nitride.

In this embodiment of this application, at least one of the modulator based on the first waveguide 11 and the modulator based on the third waveguide 13 may be integrated on the basis of a passive waveguide; and at least of the photoelectric detector 14, the laser diode 15, and the semiconductor optical amplifier may be integrated, so that an optical communication chip integrated with receiving and sending functions can be obtained, implementing an optical chip of a large-scale integrated transmitter and receiver, for example, an optical chip of an integrated coherent transmitter and receiver (integrated coherent transmitter and receiver, ICTR).

This embodiment of this application provides a chip. The chip may include a substrate, an insulation layer located on a side of the substrate, and a first waveguide and a second waveguide that are in the insulation layer. The second waveguide is located on a side of the first waveguide away from the substrate. The first waveguide has an electro-optic effect. A transmission loss of the second waveguide is smaller than a transmission loss of the first waveguide. In this way, the first waveguide may be used as a part in an active component, and the first waveguide may be used for electro-optic modulation. The second waveguide may be used as a passive component, and the second waveguide is used to transmit an optical signal. In this way, a passive component with a small loss can be implemented. A first coupling portion of the first waveguide and a second coupling portion of the second waveguide form a first coupling structure, and the first coupling structure is configured to implement optical coupling between the first waveguide and the second waveguide. Therefore, the active component and the passive component may be integrated by using the first waveguide and the second waveguide, the passive component in the chip obtained after integration has a better transmission characteristic, and the active component can implement electro-optic modulation. Compared with a chip including only the first waveguide or only the second waveguide, the chip obtained after integration can have a smaller loss and more diversified functions, expanding application scenarios of the chip, and improving performance of an optical communication system including an optical chip to some extent.

Based on the chip provided in the foregoing embodiment, an embodiment of this application further provides an optical communication device, including the chip. The optical communication device is, for example, an optical module. The optical module may be a coherent communication module, a short-distance communication module, or the like. The optical module may include the foregoing chip and an optical fiber array unit (fiber array unit, FAU) configured to fix an optical fiber array, facilitating connection between the foregoing chip and the optical fiber array. An optical module and a switch (switch) chip form an optical switch. The optical switch can be used for data exchange between servers at different layers in a large-scale data center, improving bandwidth and reducing extra power consumption caused by switching network cabling.

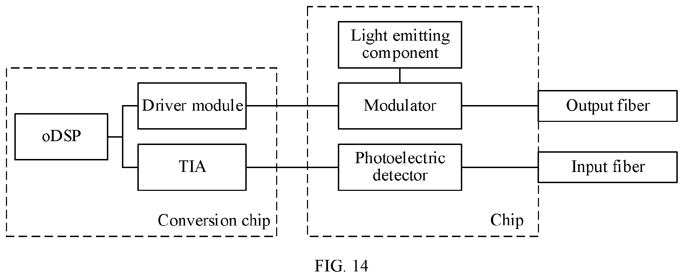

FIG. 14 is a schematic diagram of a structure of an optical communication system according to an embodiment of this application. An end of the chip is connected to a fiber, and the fiber is configured to transmit an optical signal. An other end of the chip is connected to a conversion chip, and the conversion chip is configured to process and generate an electrical signal.

When the chip includes a modulator, the optical communication device may be connected to an output fiber, and after modulating the to-be-modulated optical signal, may send the modulated optical signal through the output fiber. The to-be-modulated optical signal may be provided by using a light source outside the chip, or may be provided by using a light emitting component in the chip. The light emitting component may be, for example, a laser diode.

When the chip includes a photoelectric detector, the optical communication device may be connected to an input fiber. After receiving an optical signal from the fiber, the photoelectric detector may generate a corresponding electrical signal based on the optical signal, so as to process the electrical signal.

The conversion chip may include a driver (driver) module. The driver module is connected to the modulator to provide a modulation signal, so that the modulator modulates the to-be-modulated optical signal by using the modulation signal, and loads the modulation signal used as an electrical signal onto the to-be-modulated optical signal. The conversion chip may further include a trans-impedance amplifier (trans-impedance amplifier, TIA). The trans-impedance amplifier is connected to a fiber detector to amplify an electrical signal generated by the photoelectric detector.

An optical digital signal processing (optical digital signal process, oDSP) module is connected to the driver module to control the driver module to generate a modulation signal. The oDSP module may be connected to the trans-impedance amplifier to control the trans-impedance amplifier to amplify an electrical signal and process the amplified electrical signal.

Embodiments in this specification are all described in a progressive manner, for same or similar parts in embodiments, reference may be made to these embodiments, and each embodiment focuses on a difference from other embodiments.

The foregoing provides specific implementations of this application. It should be understood that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A chip, comprising:
a substrate;
an insulation layer located on one side of the substrate;
a first waveguide and a second waveguide in the insulation layer, wherein the second waveguide is located on a side of the first waveguide away from the substrate, the first waveguide is a part of an active component, and the first waveguide is used for electro-optic modulation, the second waveguide is used as a passive component, a transmission loss of the second waveguide is smaller than a transmission loss of the first waveguide; and
a first coupling portion of the first waveguide and a second coupling portion of the second waveguide form a first coupling structure, and the first coupling structure is configured to implement optical coupling between the first waveguide and the second waveguide.

2. The chip according to claim 1, wherein a material of the first waveguide is silicon, and a material of the second waveguide is silicon nitride.

3. The chip according to claim 1 or 2, further comprising a third waveguide in the insulation layer, where the third waveguide is located on a side of the second waveguide away from the substrate; wherein
electro-optic modulation efficiency of the third waveguide is higher than electro-optic modulation efficiency of the first waveguide; and
a third coupling portion of the first waveguide and a fourth coupling portion of the third waveguide form a second coupling structure to implement optical coupling between the first waveguide and the third waveguide.

4. The chip according to claim 1 or 2, further comprising:
a third waveguide in the insulation layer, wherein the third waveguide is located on a side of the second waveguide away from the substrate; electro-optic modulation efficiency of the third waveguide is higher than electro-optic modulation efficiency of the first waveguide; and a fifth coupling portion of the first waveguide, a sixth coupling portion of the second waveguide, and a seventh coupling portion of the third waveguide form a third coupling structure, and the third coupling structure is configured to implement optical coupling between the second waveguide and the third waveguide.

5. The chip according to claim 3 or 4, wherein a material of the third waveguide is lithium niobate, indium phosphide, or tantalum niobate.

6. The chip according to any one of claims 3 to 5, further comprising:
a first electrode pair located on two sides of the third waveguide in the insulation layer.

7. The chip according to any one of claims 3 to 6, wherein a thickness range of an insulation layer between the second waveguide and the third waveguide is [200 nm, 550 nm].

8. The chip according to any one of claims 1 to 7, further comprising:
a photoelectric detector in the insulation layer, wherein the photoelectric detector is connected to an inter-layer interconnection structure by using a doping structure, the doping structure is a semiconductor layer having a doping element, a material of the semiconductor layer is consistent with a material of the first waveguide, and a distance between the doping structure and the substrate is consistent with a distance between the first waveguide and the substrate.

9. The chip according to claim 8, wherein a distance between a surface of the photoelectric detector away from the substrate and a surface of the substrate is less than a distance between a surface of the second waveguide away from the substrate and the surface of the substrate.

10. The chip according to claim 9, wherein a size range of the photoelectric detector in a direction perpendicular to the surface of the substrate is [200 nm, 350 nm].

11. The chip according to any one of claims 1 to 10, further comprising:
a second electrode pair located on two sides of the first waveguide in the insulation layer.

12. The chip according to any one of claims 2 to 11, wherein a hydrogen content in a silicon nitride material of the second waveguide is less than or equal to 10%.

13. The chip according to any one of claims 1 to 12, wherein a transmission loss of the second waveguide is less than or equal to 0.5 dB/cm.

14. The chip according to any one of claims 1 to 13, wherein a size range of the second waveguide in a direction perpendicular to the surface of the substrate is [300 nm, 400 nm].

15. The chip according to any one of claims 1 to 14, wherein a size range of the insulation layer between the first waveguide and the second waveguide in a direction perpendicular to the surface of the substrate is [40 nm, 100 nm].

16. An optical communication device, comprising the chip according to any one of claims 1 to 15.
